# EUROPÄISCHE PATENTANMELDUNG

(11) **EP 0 638 700 A1**
(43) Veröffentlichungstag der Anmeldung: **15.02.1995**
(21) Anmeldenummer: 94111106.4
(22) Anmeldetag: 16.07.1994
(51) Int. Cl.: E04F 13/08, F16B 21/20

(54) **Halteelement zur Befestigung von Bauplatten auf Trägerprofilen**

(30) Priorität: 12.08.1993 DE 4327032
(71) Anmelder: A. Raymond GmbH & Co. KG, D-79539 Lörrach (DE)
(72) Erfinder: Mutz, Bernd, D-79650 Stopfheim (DE); Daler, Helmo, D-79539 Lörrach (DE)
(74) Vertreter: Kirchgaesser, Johannes, Dipl.-Ing.

(57) **Zusammenfassung**

Das Halteelement dient zur Befestigung von Bauplatten, insbesondere Dach- oder Fassadenplatten (11) auf Trägerprofilen (12) aus Stahlblech, welche zur Aufnahme der Halteelemente mit länglichen Aussparungen (15) versehen sind. Es besteht aus einer mit einem Langloch (2) versehenen, rechteckigen Stützplatte (1) aus Federstahl mit zwei an den Schmalseiten abstehenden Stützlappen (4), welche sich an den Schmalseiten der Aussparung (15) abstützen.

Zur Verankerung des Halteelements im Trägerprofil ( 12 ) sind an den Längsseiten der Stützplatte (1) etwa rechtwinklig zur Plattenebene Spreizlappen (3) angeformt, die in die Aussparung (15) federnd eingedrückt werden. An dem Spreizenlappen (3) befinden sich im Abstand von der Stützplatte (1) an den Spreizlappen ( 3 ) zueinandergebogene, schräg gegeneinander gerichtete Klemmlappen (5) mit scharfen Kanten (6), welche beim Eintreiben eines Plattennagels (9) auseinandergedrückt werden und dabei die Spreizlappen ( 3 ) noch fester gegen die Längskanten der Aussparung ( 15 ) andrücken.

## Beschreibung

Die Erfindung bezieht sich auf ein Halteelement aus Federstahl zur Befestigung von Bauplatten, insbesondere Dach- oder Fassadenplatten auf Trägerprofilen aus Stahlblech, welche zur Aufnahme der Halteelemente mit länglichen Aussparungen versehen sind.

Aufgabe der Erfindung ist es, ein Halteelement zu schaffen, welches sich einerseits leicht in den Aussparungen der Trägerprofile verankern läßt und andererseits zum Eintreiben von normalen Plattennägeln, d.h. Baunägeln mit breiten Köpfen geeignet ist. Hierbei ist noch zu berücksichtigen, daß die in den Fassadenplatten vorgebohrten Löcher nicht genau positionierbar sind, so daß das zu schaffende Halteelement auch einen gewissen Längenausgleich bieten muß.

Diese Aufgabe wird durch das im Anspruch 1 angegebene Halteelement gelöst, wobei in den Unteransprüchen noch weitere für den angestrebten Verankerungseffekt förderliche Merkmale angegeben sind, die im einzelnen folgende Vorteile aufweisen:

Anspruch 2 ermöglicht eine bessere Einführung und seitliche Abstützung der Plattennägel, während durch die Merkmale des Anspruchs 3 für die einzelnen Befestigungsstellen einer Platte ein gewisser Höhenausgleich ermöglich wird, so daß an jeder Lagerungsstelle eine satte Auflage gewährleistet ist. Anspruch 4 sorgt für eine größtmögliche Klemmkraft der Klemmlappen und durch Anspruch 5 wird ein größtmöglicher Reibungswiderstand zwischen Klemmbacken und Nägel sichergestellt.

In der Zeichnung ist ein Ausführungsbeispiel der Erfindung dargestellt und soll nachfolgend näher erläutert werden. Es zeigt
- Fig. 1: das Halteelement im Schnitt gemäß Linie I - I in Fig. 2,
- Fig. 2: das gleiche Haltelelement in einer Draufsicht,
- Fig. 3: ein montiertes Trägerprofil vor dem Einsetzen des Halteelements und
- Fig. 4: das gleiche Trägerprofil mit eingesetztem Halteelement und aufgelegter Bauplatte nach dem Einschlagen des Plattennagels.

Das in den Figuren dargestellte Halteelement besteht im wesentlichen aus einer aus Federstahl hergestellten, rechteckigen Stützplatte 1 mit einem Langloch 2 zum Einführen eines Plattennagels 9. An den Längsseiten der Stützplatte 1 sind etwa rechtwinklig nach der gleichen Seite Spreizlappen 3 angeformt, welche dazu bestimmt sind, in entsprechend breite Aussparungen 15 von Trägerprofilen 12 eingesteckt und dort durch Spreizen verankert zu werden, während die Stützplatte 1 mit zwei an ihren Schmalseiten abstehenden Stützlappen 4 am Rand der Aussparung 15 aufliegt.

An den Spreizlappen 3 sind im Abstand "A" von der Stützplatte 1 schräg gegeneinander gerichtete Klemmlappen 5 herumgebogen, deren schade Kanten 6 einen zum Einklemmen eines Plattennagels 9 geeigneten Abstand voneinander aufweisen.

Zum leichteren Einführen des Plattennagels 9 ist das Langloch 2 an den Längsseiten durch zu den Klemmlappen 5 weisende, nach unten zusammenlaufende Einführlappen 7 gebildet. Der Abstand der parallel zueinander verlaufenden Abschlußkanten 8 der Einführlappen 7 ist hierbei dem Durchmesser des einzutreibenden Plattennagels 9 derart angepaßt, daß dieser an jeder Stelle leicht in die Öffnung einzuführen ist.

Aus den Spreizlappen 3 sind etwa in deren Mitte Auflagelappen 10 herausgestanzt und an den Biegekanten der Spreizlappen 3 um einige Winkelgrade über die Ebene der Stützplatte 1 hochgebogen. Die Auflagelappen 10 sorgen für eine satte Auflage der Fassadenplatte 11 und bieten überdies die Möglichkeit des Höhenausgleichs zwischen den einzelnen Befestigungsstellen.

Das Halteelement dient zur Befestigung von Bauplatten, wie z.B. Fassadenplatten 11 auf Trägerprofilen 12, welche auf irgend einem geeigneten Untergrund 13 auf übliche Weise, beispielsweise durch Schrauben 14, befestigt wird.

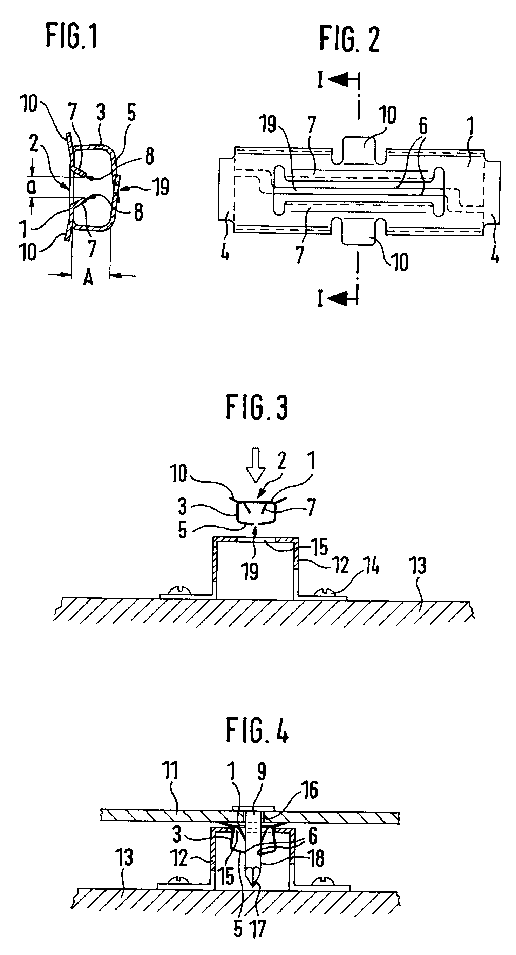

Die Trägerprofile 12 sind, wie aus Figur 3 ersichtlich, zur Aufnahme des Halteelements mit länglichen Aussparungen 15 versehen, in welche die Spreizlappen 3 bis zur Auflage der Stützlappen 4 auf den Schmalseiten der Aussparung 15 eingedrückt werden.

Zur Befestigung der Fassadenplatte 11 ist diese mit vorgebohrten oder vorgestanzten Löchern 16 versehen, die möglichst genau über dem Langloch 2 zu positionieren ist. Zum Eintreiben des Plattennagels 9 wird dessen Spitze 17 in das Plattenloch 16 eingeführt und dann zwischen den Einführlappen 7 hindurch in den von den scharfen Kanten 6 der Klemmlappen 5 gebildeten Spalt 19 eingetrieben. Dabei werden die Klemmlappen 5 entsprechend dem Durchmesser des Plattennagels 9 auseinandergedrückt und die Spreizlappen 3 gleichzeitig stark auseinandergebogen, so daß sich diese an den Längsseiten der Aussparung 15 fest anlegen.

Die scharfen Kanten 6 der Klemmlappen 5 graben sich hierbei etwas in die Schaffoberfläche 18 des Plattennagels 9 ein. Dieser Verankerungseffekt kann noch dadurch verstärkt werden, daß die Schaftoberfläche 18 des Nagels 9 etwas aufgerauht wird.

## Patentansprüche

1. Halteelement aus Federstahl zur Befestigung von Bauplatten, insbes. Dach- oder Fassadenplatten auf Trägerprofilen aus Stahlblech, welche zur Aufnahme der Halteelemente mit länglichen Aussparungen versehen sind, **bestehend** aus einer sich an den Schmalseiten der Aussparung ( 15 ) abstützenden und mit einem Langloch ( 2 ) versehenen, rechteckigen Stützplatte ( 1 ) mit zwei an den Schmalseiten abstehenden Stützlappen ( 4 ), aus zwei an deren Längsseiten etwa rechtwinklig angeformten, in die Aussparung ( 15 ) federnd eindrückbaren Spreizlappen ( 3 ) und an diesen im Abstand von der Stützplatte ( 1 ) zueinandergebogenen, schräg gegeneinander gerichteten Klemmlappen ( 5 ), deren scharfe Kanten ( 6 ) einen zum Einklemmen eines Plattennagels ( 9 ) geeigneten geringen Abstand voneinander aufweisen.

2. Halteelement nach Anspruch 1, dadurch gekennzeichnet, daß das Langloch ( 2 ) durch schräg zu den Klemmlappen ( 5 ) weisende, nach unten zusammenlaufende Einführlappen ( 7 ) gebildet wird, deren parallel zueinander verlaufende Abschlußkanten ( 8 ) einen dem Durchmesser des einzutreibenden Nagels ( 9 ) angepaßten Abstand "a" aufweisen.

3. Halteelement nach Anspruch 1 oder 2, dadurch gekennzeichnet, daß aus den Spreizlappen ( 3 ) etwa in deren Mitte Auflagelappen ( 10 ) herausgestanzt und an den Biegekanten um einige Winkelgrade über die Ebene der Stützplatte ( 1 ) hochgebogen sind.

4. Halteelement nach einem der Ansprüche 1 bis 3, dadurch gekennzeichnet, daß die scharfen Kanten ( 6 ) der Klemmlappen ( 5 ) sich fast berühren.

5. Halteelement nach einem der Ansprüche 1 bis 4, dadurch gekennzeichnet, daß die zum Eintreiben vorgesehenen Plattennägel ( 9 ) im Haltebereich eine aufgerauhte Schaftoberfläche ( 18 ) aufweisen.
